# EUROPEAN PATENT SPECIFICATION

(11) **EP 4 409 865 B1**
(45) Date of publication and mention of the grant of the patent: **21.01.2026**
(21) Application number: 22754055.6
(22) Date of filing: 18.07.2022
(51) Int. Cl.: H04L 65/1069, H04L 65/1046, H04L 67/12

(54) **METHOD AND SYSTEM FOR CREW-PASSENGER COMMUNICATION**
VERFAHREN UND SYSTEM FÜR BESATZUNGSPASSAGIERKOMMUNIKATION
PROCÉDÉ ET SYSTÈME DE COMMUNICATION ÉQUIPAGE-PASSAGERS

(30) Priority: 30.09.2021 IN 202141044842; 12.11.2021 GB 202116288
(43) Date of publication of application: 07.08.2024
(73) Proprietor: ALSTOM Holdings, 93400 Saint-Ouen-sur-Seine (FR)
(72) Inventor: SALI, Hemant, Pashan, Maharashtra 411021 Pune (IN); DOYLE, Roger, Cannock Staffordshire WS11 9RN (GB)
(74) Representative: Zimmermann & Partner Patentanwälte mbB
(86) International application number: PCT/EP2022/070062
(87) International publication number: WO 2023/051970

(56) References cited:
- GB-A- 2 590 379
- US-A1- 2016 285 542
- US-A1- 2019 058 783

## Description

### Technical field

The present invention relates to methods and systems for providing crew-passenger communication in a vehicle for public passenger transport, in particular a respective railway vehicle.

### Background

Many vehicles for public passenger transport are equipped with an announcement system for providing live messages such as safety announcements, status announcements, and connecting travel announcements to the passengers by a driver or another crew member such as a steward or a conductor. For example, analog lines may be used for making public announcements by a crew member from fixed locations in the vehicle.

For example, document US 2019/058783 A1 discloses a configurable VolP device having a touch screen and a robust structure adapted to be used in harsh environments. The VolP device being adapted to be used in a point-to-point or a multicast communication. The VolP device having multiple modes: VolP telephone mode, serverless page-party station mode (SP2, SPP), access panel mode, serverless point-to-point intercom mode, party line call mode and video call mode. Document US 2016/285542 A1 discloses a method for enabling a control device for controlling wireless communication in a vehicle such as aircraft, ships, trains, buses, and automobiles . Document US 10 171556 B2 describes systems and methods for transferring a public announcement message to an onboard public announcement system (OPAS) installed on a vehicle using a personal electronic device. The personal electronic device establishes a wireless network connection to the OPAS to transmit a public announcement message stored on a personal electronic device. The personal electronic device transmits the public announcement message to the OPAS via the wireless network connection. The personal electronic device may download messages from a remote public announcement server for transfer to the OPAS. The personal electronic device may also record messages and control the playback of messages on the OPAS.

Not least for safety reasons, vehicles for public passenger transport are typically further equipped with passenger communication devices arranged in fixed locations of the vehicle and allowing for driver-passenger communication. For example, talkback units may be arranged next to passenger emergency alarm handles. A passenger, who wants to speak with the driver and/or needs help, may request initiating a voice communication via an analog line with the driver by pressing a respective button of the passenger communication device. In response, the driver may accept establishing voice communication and talk with the passenger immediately or postpone the communication if driving the vehicle currently requires the full attention of the driver. In any case, the driver can be distracted from other important tasks by the communication request and the subsequent talk.

Therefore there is a need for improving existing solutions for communication with passengers.

### Problem to be solved

It is an objective of the invention to provide methods, systems and devices allowing for improved efficiency of passenger-requested (passenger-initiated) communication within vehicles.

Said task is solved by the subject matter of the independent claims. The invention is defined by a method according to claim 1 and a system according to claim 8. Further embodiments are set out in the dependent claims.

According to an example of a method for crew-passenger communication in a vehicle for public passenger transport, in particular a respective railway vehicle, the method includes receiving, on a mobile device, a signal, in particular a notification when a passenger communication device of the vehicle is operated and/or has been operated; and establishing a data connection between the mobile device and the passenger communication device, wherein at least a part of the data connection is (established as) a Voice over IP (VoIP) data connection.

Typically, the data connection is (established as) a VoIP data at least at the end of the mobile device, i.e. between the mobile device and a server provided by the vehicle for public passenger transport, which is typically a railway vehicle, and in the following also referred to as vehicle for short.

With the proposed VolP based solution for communication, not only the conductor but also (other) crew members like conductors in the train can communicate with the passenger in the vehicle (train) via the operated passenger communication device using a mobile device, typically a personal mobile device. This helps the crew members removing burden from the driver to attend the passenger communication and/or alerts and taking on additional workload from the driver, respectively. Thus, the productivity and efficiency of the driver may be improved. Further, the crew can typically communicate with the passenger from anywhere in the vehicle (train). In addition, passenger enquiries may be answered more quickly, in more detail and/or under less time pressure, at least compared to a situation in which the driver carries out this task while driving the vehicle. This can also increase the satisfaction of staff and passengers.

The functionality of taking over communication with the passenger may be implemented using a crew communication gateway of the vehicle.

The passenger communication device may be implemented as a respective unit (passenger communication, PCU), in particular a talkback unit comprising a microphone, a loudspeaker, typically an analog loudspeaker, and an input device such as a button to be operated / pressed by passengers to request voice communication and/or raise an alarm. The passenger communication device typically allows for call for aid (CFA) and sending a passenger emergency alarm (PEA).

Further, the vehicle may have several passenger communication devices, for example at least one or two PASSENGER COMMUNICATION DEVICEs in each wagon of the vehicle.

Furthermore, the passenger communication device(s) may be connected with an audio system of the vehicle.

The data connection may include a VoIP data connection between the mobile device and an audio system of the vehicle connected with the passenger communication device, typically via a VoIP server on the vehicle.

Further, the data connection may either have a further VolP data connection between the audio system and the passenger communication device or, more typically, an analog data connection between the audio system and the passenger communication device.

Typically, the respective VoIP data connection is configured to use the real-time transport protocol (RTP), in particular the secure real-time transport protocol (SRTP) for transferring and/or exchanging voice messages as respective VoIP messages.

The term "server" as used herein shall refer both to a computer program (software) and a device providing functionality for other programs or devices, typically called "clients", in particular to a respective device including the software for providing server functionality (for clients) in a network, in particular a network using the internet protocol suite, Transmission Control Protocol / Internet Protocol (TCP/IP) and/or User Datagram Protocol / Internet Protocol (UDP/IP). In the following a device providing server functionality in a network is also referred to as "host".

The typically used signaling protocols include the session initiation protocol (SIP) for initiating, maintaining, and terminating real-time sessions, in particular the secure SIP signaling protocol (SIPS), and the real-time transport protocol (RTP), in particular the secure real-time transport protocol (SRTP) for transferring the VolP message as respective data stream. Further, the signaling protocols may include the session description protocol (SDP) for describing session parameters and/or metadata referring to the VolP message. Accordingly, transferring of the VolP message from the mobile device to the audio system can be achieved with very low overhead and at most short time delay.

Alternatively, the signaling protocol may be based on or include other protocols such as RFC 4566, a H.323. However, these protocols typically require a larger overhead.

The data connection between the mobile device and the audio system is typically established via a VoIP server on the vehicle using the signaling protocols.

In particular, establishing the data connection between the mobile device and the audio system may include establishing a first (VoIP) data connection between the mobile device and the VolP server using the signaling protocols, and establishing a second (VoIP) data connection between the VoIP server and the audio system. Typically, the VolP server initiates establishing the second data connection with the audio system using the signaling protocol (after the first data connection is established).

Further, the VoIP server may be configured to maintain the VolP data connection with the audio system and/or to terminate the VolP data connection with the audio system.

As such the VolP server is typically configured to establish, maintain and/or terminate the second (VoIP) data connection typically forming a second part of the VoIP data connection.

The VoIP server may even be configured to establish (maintain and/or terminate) the VoIP data connection with the mobile device. However, the (first part of the) VoIP data connection between the mobile device and the VoIP server is typically established on request of (initialized by) the mobile device and an app running on the mobile device, respectively.

The VoIP server may e.g. be provided by a Crew Communication Gateway (CCG) which acts as a SPOC (Single point of contact) for mobile devices to connect to a data network of the train and get the desired functionalities such as Public Address, play pre-recorded messages, internal communication, and/or passenger communication.

In these embodiments, the CCG may host the VolP server to carry out the VoIP functionality and may employ SIP over RTP/SRTP.

Note that the VoIP server may also be implemented as a logical device, for example as part of a controller of the audio system.

After establishing the data connection, voice streams may be exchanged between the mobile device and the passenger communication device, typically via the VoIP server (e.g. the CCG) and the audio system.

The voice streams may include respective RTP-streams, in particular SRTP-streams.

Further, exchanging the voice stream(s) may include converting an analog audio signal, in particular an analog audio signal referring to a voice message into RTP-packets for the RTP-stream and adding the analog audio signal as RTP-packets to the RTP-stream, respectively.

Converting the analog audio signal referring to the spoken (live) message of the passenger may be performed by a controller of the audio system, an audio converter of the audio system, in particular a train amplifier of the audio system or the passenger communication device (if implemented with VoIP-functionality).

Typically, the controller of the audio system hosts a SIP user agent for passenger communication using VoIP communication.

Further, the controller of the audio system is typically configured to perform Analog to Digital (AD) and Digital to Analog (DA) communication between VoIP the Communication channel and an analog communication channel(s) which interface with the respective passenger communication device (if not implemented with VoIP-functionality).

Voice spoken by crew is typically converted to VoIP stream by the mobile device. The term "app" as used herein shall embrace the terms "web application" and "mobile application".

Further, the mobile device typically includes a storage storing a web application or a mobile application which may also be used for one or more of the following functions: establishing a data connecting to a VolP server, connecting to the VolP server, converting a spoken message (on the fly into) a VoIP message, transferring the VolP message to the VolP server, typically also on the fly.

Further, exchanging the voice stream(s) may include converting the packets of incoming RTP-streams into a respective analog audio signals, in particular by the audio system.

Depending on communication direction and/or configuration of the system, the respective converting of received/incoming RTP-packets (streams) may be performed by the mobile device and an app running thereon, respectively, the controller of the audio system, the audio converter of the audio system, in particular the train amplifier of the audio system or the passenger communication device (if implemented with VoIP-functionality).

Prior to exchanging the voice stream(s), the data connection may be established using a signaling protocol for initiating, maintaining, and terminating real-time sessions for voice applications, in particular the session initiation protocol, SIP, and/or the session description protocol, SDP, for describing session parameters and/or metadata referring to the voice stream(s).

The VolP server and the app may support different languages, and are typically configured for a specific language in these embodiments, for example a preselected language such as English. This facilitate communication.

Typically, the mobile device communicates with the VolP server using SIP (in particular RFC 3261), and the VoIP server communicates with the audio system using SIP (in particular RFC 3261).

The VoIP message is typically transmitted from the mobile device to the VolP server using the real time transmission protocol (RTP) such as RFC 3550, in particular a secure real time transmission protocol (SRTP) such as for security reasons.

Further, the VoIP message is typically transmitted from the server to the audio system using RTP, in particular SRTP.

In other words, the respective VoIP-functionality is typically implemented via SIP and RTP, in particular using SIPS and SRTP, and may be supplemented by the session description protocol SDP, in particular RFC 4566.

Further, SIP Extension for Instant Messaging (RFC 3428 SIP) and/or RTP Profile for Audio and Video Conferences with Minimal Control (RFC 3551) may be used.

The VoIP server typically provides SIP-server functionality and VoIP-server functionality.

Likewise, the mobile device (the app) and the audio system typically provide a SIP-agent functionality, and SIP-user agent functionality, respectively.

Further, the mobile device (the app) and the audio system may provide VoIP-agent functionality.

In other words, at least one of, typically all of the mobile device, the passenger communication device, the audio system and the VoIP server provides SIP-functionality and VoIP-functionality.

However and as already explained above, other protocols for handshaking and session initiating, respectively, may also be used.

In a typical embodiment, the mobile device, the VoIP server and the controller or the audio converter of the audio system provides SIP-functionality and VoIP-functionality, and the controller or the audio converter of the audio system is connected to simple analog loudspeaker(s) of the passenger communication device(s).

The mobile device may be a smart phone or a tablet computer.

Further, the mobile device may be a personal electronic device of a person, in particular an employee such as the conductor or another crew member. This typically means that the person has to log in to the mobile device prior to connecting to the VolP server. As such the personal electronic device may also be provided by the employer, e.g. a railway company.

Accordingly, the mobile device may be a personal smart phone or a tablet computer.

The mobile device may be wirelessly connected to a wireless interface of the vehicle which is connected to the VoIP server, a wireless router of the vehicle which connected to the VoIP server, or any other device of the vehicle connected to the VolP server and providing a wireless interface for communication with the mobile device. In other words, the mobile device may be (wirelessly) connected to a Wi-Fi network of the vehicle (which is different from the local area network of the vehicle).

Accordingly, connecting the mobile device to the server typically includes connecting the mobile device to and/or via the wireless interface or the wireless router of the vehicle, and/or the other device providing the wireless interface.

Further, connecting the mobile device to the server may include login/registration on/with the server, e.g. using a username and a password that may be provided by or via the app.

Typically, the mobile device is pre-registered as crew-member device.

The wireless interface may include a (wireless) router and one or more wireless access points.

The server, the audio system, and the wireless interface (in particular the wireless access point(s) and/or the wireless router) are typically connected with each other via a local area network of the vehicle, in particular a local area network that is a wired data network and/or uses the Internet Protocol and/or Ethernet technology.

For example, the local area network may use coaxial cable, twisted pair links and/or fiber optic links in conjunction with switches as a shared medium for information transfer.

Accordingly, communication and/or transferring the VoIP message to the server may be facilitated.

Typically, establishing the VoIP data connection between the mobile device and the audio system (and a controller thereof, respectively) may include establishing a first VoIP data connection between the mobile device vehicle and the VoIP server, and establishing a second VolP data connection between the VoIP server and the audio system, typically by sending a respective connection request "SIP INVITE" and receiving a respective response message "SIP 200 OK".

More particular, the mobile device may initiate establishing the VoIP data connection with the audio system using the signaling protocol (SIP and SDP if desired) via the VoIP server by sending a connection request "SIP INVITE" to the VolP server. Upon receiving the connection request from the mobile device, the VoIP server may send a connection request "SIP INVITE" to the audio system using the signaling protocol (SIP and SDP if desired). Upon receiving the connection request from the VolP server, the audio system may send a response message "SIP 200 OK" to the VolP server using the signaling protocol (SIP). Upon successfully receiving the response message "SIP 200 OK" from the audio system, the VolP server may send a response message "SIP 200 OK" to the mobile device using the signaling protocol (SIP). This may be auto attended.

Upon successfully establishing the VoIP data connection between the mobile device and the audio system (upon successfully receiving the response message "SIP 200 OK" from the VoIP server), voice stream(s) may be exchanged via the VolP server, typically using RTP.

Exchange of voice stream(s) may be ended using the signaling protocol (SIP). This may also be initiated by the mobile device (app).

In particular, the connected mobile device may send an end message "SIP BYE" to the audio system via the VoIP server.

More particular, the connected mobile device may send an end message "SIP BYE" to the VoIP server. Upon receiving the end message "SIP BYE" from the mobile device, the VolP server may send an end message "SIP BYE" to the audio system. Upon receiving the end message "SIP BYE" from the VolP server, the audio system may send a (further) response message "SIP 200 OK" to the VoIP server using the signaling protocol (SIP). Upon successfully receiving the response message "SIP 200 OK" from the audio system, the VolP server may send a (further) response message "SIP 200 OK" to the mobile device using the signaling protocol (SIP).

In this way, a particularly fast and/or efficient transferring the voice message as VolP message with very low overhead only can be provided.

The signal received at the mobile device is typically indicative for a change of a status the passenger communication device and/or indicative for an activation of the passenger communication device.

Alternatively, the signal may be an incoming call notification or request ("SIP INVITE"), e.g. forwarded by the audio system, typically via the VoIP server and the CCG, respectively, to the connected mobile device(s).

In particular depending on a respective functionality of the passenger communication device, the VoIP data connection may be established as a full-duplex VoIP data connection or a half-duplex VoIP data connection.

When the passenger communication device is configured for half-duplex VoIP data connection, establishing the (half-duplex) VolP data connection typically includes at least one of, in a bidirectional communication both of:
- setting the mobile device into a speak mode for the VolP data connection,
   and
- setting the mobile device into a listen mode for the data connection.

These steps may be initiated by the mobile device and the app, respectively, for example by pressing respective buttons displayed on the display of the mobile device.

Setting the mobile device into a speak mode may include:
- sending a first communication initializing message, in particular a respective SIP-message ("CmdSetPassComMode=1"), from the mobile device to the audio system, typically via the VoIP server (in two respective sub steps); and
- sending a third communication initializing status message, in particular a respective SIP-message ("StatusPassComMode=1"), from the audio system (5) to the mobile device (1, 1'), typically via the VoIP server (in two respective sub steps).

Setting the mobile device into a listen mode may include:
- sending a second communication initializing message, in particular a respective SIP-message ("CmdSetPassComMode=0"), from the mobile device to the audio system, typically via the VolP server (in two respective sub steps); and
- sending a fourth communication initializing status message, in particular a respective SIP-message ("StatusPassComMode=0"), from the audio system to the mobile device, typically via the VoIP server (in two respective sub steps).

According to an example of a system for crew-passenger communication in a vehicle for public passenger transport, in particular a respective railway vehicle, the system includes a wireless interface provided by a vehicle for public passenger transport, and connected to a local area network of the vehicle, a passenger communication device provided by the vehicle, and configured to be operated by a passenger, and a mobile device connectable to the local area network via the wireless interface, and, when connected to the local area network via the wireless interface, configured to receive a signal, in particular a notification when the passenger communication device is operated and/or has been operated by the passenger, and to request establishing a data connection between the mobile device and the passenger communication device. At least a part of the data connection is configured to be established as a VolP data connection.

The local area network is typically a wired data network and/or uses the Internet Protocol and/or Ethernet technology.

Typically, the system includes a VolP server provided by the vehicle and connectable to the local area network.

The mobile device may communicate with the audio system via the VolP server using the signaling protocols.

Further, the VoIP server may communicate with the audio system using the signaling protocols.

The VolP server may in particular be configured to communicate with one, typically both of the audio system and the mobile device using a protocol providing at least one of, typically all of encryption, message authentication, integrity, and optionally replay attack protection. The real time transmission protocol is typically implemented as a secure real time transmission protocol (SRTP).

The VoIP server may be provided by one or more computer devices of a passenger comfort system of the vehicle or a CCG, the respective computer(s) hosting the VolP server and typically bridging the Wi-Fi network of the vehicle and the local area network of the vehicle.

In case the existing computing devices of the comfort system does not allow for hosting the VoIP server due to technical reasons, a new computing device may be added to the comfort system to host the VoIP server.

As already explained above, the mobile device may be a smartphone, a tablet computer or the like.

The mobile device may include (store) an app which is, when running on the mobile device, configured to initialize establishing a first data connection with the VolP server, and initialize transferring the voice message as VoIP message to the audio system and the VolP server, respectively.

Likewise, the VoIP server is typically configured to establish a second VolP data connection with the audio system, typically after the first data connection between the mobile device and the VolP server has been established.

The audio system may include an audio converter configured to convert RTP streams into an analog audio signal, in particular a train amplifier.

Alternatively, the loudspeaker(s) of the passenger communication device(s) may be configured to convert the VoIP message into the analog audio signal.

Further, at least one of the VoIP server, the audio converter and the controller (5) of the audio system may be implemented as a respective logical device.

Typically, the system is configured to perform the methods as explained herein.

More particular, the system typically incudes an audio system provided by the vehicle, connectable with the local area network and the passenger communication device.

When connected, the audio system is typically configured to at least one of, more typically all of:
- receive, from the passenger communication device , a signal referring to an operational status of the passenger communication device or a change of the operational status, in particular a respective status information referring to an operational status of a button of the passenger communication device;
- forward and/or broadcast the signal via the local area network;
- receive and/or forward RTP-streams via the local area network;
- convert an analog audio signal, in particular an analog audio signal (A, A') referring to a voice message into an RTP-stream, in particular an SRTP-stream (and add the analog audio signal as RTP-packets to an RTP-stream, in particular an SRTP-stream, respectively); and
- convert the packets of the RTP-stream into a respective analog audio signal.

The system typically includes a VoIP server provided by the vehicle, connectable to the local area network, and, when connected, configured to communicate with the mobile device and the audio system using RTP, in particular SRTP, and facilitate VolP communication between the mobile device and the audio system, respectively.

The VolP server or the audio system may be configured to create a notification, in particular an alert notification, forward and/or broadcast the notification via the local area network when an operational status of the passenger communication device has been changed.

When connected, the audio system is typically configured to at least one of, more typically both of:
- initiating, upon receiving, from the mobile device, typically via the VolP server, a first communication initializing message, in particular a respective SIP-message ("CmdSetPassComMode=1"), setting the passenger communication device into a listen mode for the data connection; and
- initiating, upon receiving, from the mobile device, typically via the VoIP server, a second communication initializing message, in particular a respective SIP-message ("CmdSetPassComMode=0"), setting the passenger communication device into a speak mode for the data connection.

A mobile device, in particular a mobile device as explained herein may be connectable to the VolP server via the wireless interface provided by the vehicle and connected with the local area network.

Typically, the desired functionality of the mobile device is provided by an app when running on the mobile device.

The (running) app is typically configured to at least on of, more typically all of:
- create an entry in a locally stored list or database and/or display a message/notification on a screen of the mobile device upon receiving the signal;
- create and/or activate at least one button on the screen upon receiving the signal or when a user of the mobile device responds to the displayed message/notification or a display of the entry in a predefined manner; and
- initialize establishing the data connection, typically via the VoIP server.

The respective button may, when pressed and for half-duplex communication, allows for at least one of, typically both of:
- selecting, for the mobile device, a speak mode for the data connection;
- selecting, for the mobile device, a listen mode for the data connection.

A (respective) button on the display of the mobile device may be used for initializing establishing and initializing terminating the data connection (both for half-duplex communication and full-duplex communication).

Note that, only one button to initialize establishing the data connection and terminating the established data connection may be required in embodiments referring to full-duplex communication.

When connected and in a connected state, respectively, the mobile device may be (further) configured, typically via the app, to at least one of or even all of:
- sending a first communication initializing message if the speak mode is selected, e.g. via a respective button;
- sending a second communication initializing message if the listen mode is selected, e.g. via the button;
- upon receiving from the audio system, typically via the VolP server, a third communication initializing message, in particular a respective SIP-message ("StatusPassComMode=1"), enabling the speak mode of the mobile device for the data connection; and
- upon receiving from the audio system, typically via the VoIP server, a fourth communication initializing status message, in particular a respective SIP-message ("StatusPassComMode=0"), enabling the listen mode of the mobile device for the data connection.

The (running) app may (further) provide or facilitate one or more or even all of the following features/functionalities:
Public Address: Manual Public Announcement;
Play pre-recorded emergency/normal message;
Internal Communication: Full duplex VoIP communication, typically between a conductor using the mobile device and fixed driver's handset in the train cabs or between two mobile devices using full duplex communication using VoIP;
Passenger Communication: VoIP communication between conductor using a mobile device and passenger who operated Call For Aid (CFA) at a CFA device; and
View/Display existing alarms such as CFA, PEA (Passenger Emergency Alarm), EEH (Emergency Egress Handle).

Other embodiments include on one or more computer-readable storage media, and one or more computer programs recorded on the one or more computer-readable storage media or computer storage devices, and configured to perform the processes of the methods described herein.

In particular, a computer program and/or a computer-readable storage medium may include instructions which, when executed by a one or more computing units (processors) of a system, in particular crew-passenger communication system disposed in a public transport vehicle, cause the system to carry out the processes of the methods explained herein.

The above-described embodiments can be combined with each other in any way if not specified otherwise. Those skilled in the art will recognize additional features and advantages upon reading the following detailed description, and upon viewing the accompanying drawings.

### Brief description of the figures

The attached drawings illustrate embodiments and together with the description serve to explain the principles of the invention. The elements of the drawings are shown relative to each other and are not necessarily to scale.

The same reference numbers denote similar or even equal components. Arrows shown in Fig. 1A to 3A typically indicate flow of information and/or connections for exchanging information and data respectively.
FIG. 1A is a block diagram schematically illustrating a system for crew-passenger communication according to embodiments.
FIG. 1B is a block diagram schematically illustrating a system for crew-passenger communication according to embodiments.
FIG. 1C is a block diagram schematically illustrating a system for crew-passenger communication according to embodiments.
FIG. 2A is a block diagram schematically illustrating a system for crew-passenger communication according to embodiments.
FIG. 2B is a block diagram schematically illustrating a system for crew-passenger communication according to embodiments.
FIG. 3A is a block diagram schematically illustrating a system for crew-passenger communication according to embodiments.
FIG. 3B illustrates a flow chart of a method for system for crew-passenger communication according to embodiments.
FIG. 3C illustrates a flow chart of a method for system for crew-passenger communication according to embodiments.

### Detailed description

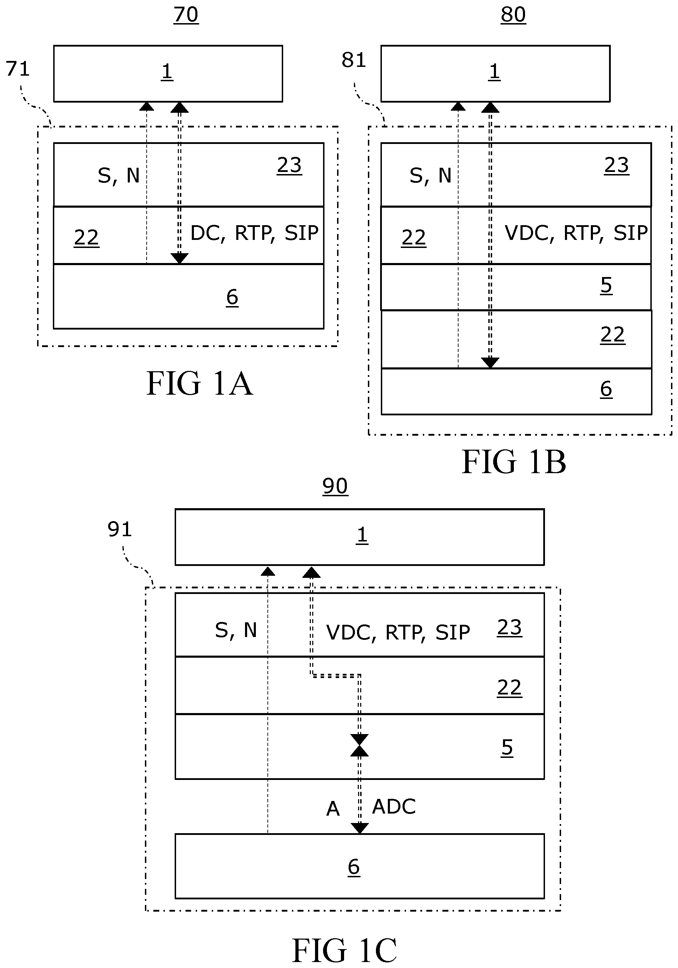

FIG. 1A is a block diagram schematically illustrating a system 70 and methods for crew-passenger communication.

In the exemplary embodiment, system 70 includes a mobile device 1 and an exemplary railway vehicle (train) 71 providing a local area network 22, a wireless interface 23 connected to the local area network 22 and a passenger communication device 6 that may be operated by a passenger.

The mobile device 1 may be connected to the local area network 22 via the wireless interface 23.

As indicated by the dashed arrow in Fig. 1A, upon operating the passenger communication device 6 by a passenger, a signal S such as a notification N may be sent from the passenger communication device 6 via the local area network 22 and the wireless interface 23 to the mobile device 1.

Upon receiving the signal S (notification N), a data connection DC, which is at least in part a VoIP data connection, between the mobile device 1 and the passenger communication device 6 may be established, typically using SIP. This is typically initialized by the mobile device 1, more particular by an app running on mobile device 1.

Thereafter, voice streams may be exchanged between mobile device 1 and passenger communication device 6 (via local area network 22 and wireless interface 23). The corresponding processes are represented by the dashed double arrow in Fig. 1A.

FIG. 1B is a block diagram schematically illustrating a system 80 and methods for crew-passenger communication.

The system 80 is similar to system 70 explained above with regard to Fig. 1A. However, the data connection between the mobile device 1 and the passenger communication device 6 of vehicle 81 is completely implemented as VolP data connection VDC. In this embodiment, the passenger communication device 6 also hosts a SIP agent.

Furthermore, vehicle 81 may be equipped with an audio system 5.

In the exemplary embodiment, audio system 5 may also provide VoIP-server functionality.

Further, audio system 5 may be connected with the local area network 22 and, in the exemplary embodiment, with the passenger communication device 6 via local area network 22.

Audio system 5 is typically configured to:
- receive, from passenger communication device 6, a signal S referring to an operational status of the passenger communication device 6 or a change of the operational status, in particular a respective status information referring to an operational status of a button of the passenger communication device 6 such as a respective notification;
- forward the signal S to mobile device 1;
- receive respective RTP-streams from mobile device 1 and passenger communication device 6, respectively; and
- forward the received RTP-streams to passenger communication device 6 and mobile device 1, respectively.

FIG. 1C is a block diagram schematically illustrating a system 90 and methods for crew-passenger communication.

The system 90 is similar to system 80 explained above with regard to Fig. 1B. However, the data connection between the mobile device 1 and the passenger communication device 6 of vehicle 91 is only partly implemented as VoIP data connection VDC.

In the exemplary embodiment, audio system 5 is connected with the passenger communication device 6 via analog lines that may be used for analog data connection ADC.

Accordingly, audio system 5 is typically configured to convert, typically on the fly, analog audio signals (voice message) A recorded by a microphone of mobile device 1 into an RTP-stream, in particular an SRTP-stream, and to convert packets of the RTP-stream received from mobile device 1 into a respective analog audio signals A to be sent to passenger communication device 6 and a loudspeaker thereof, respectively.

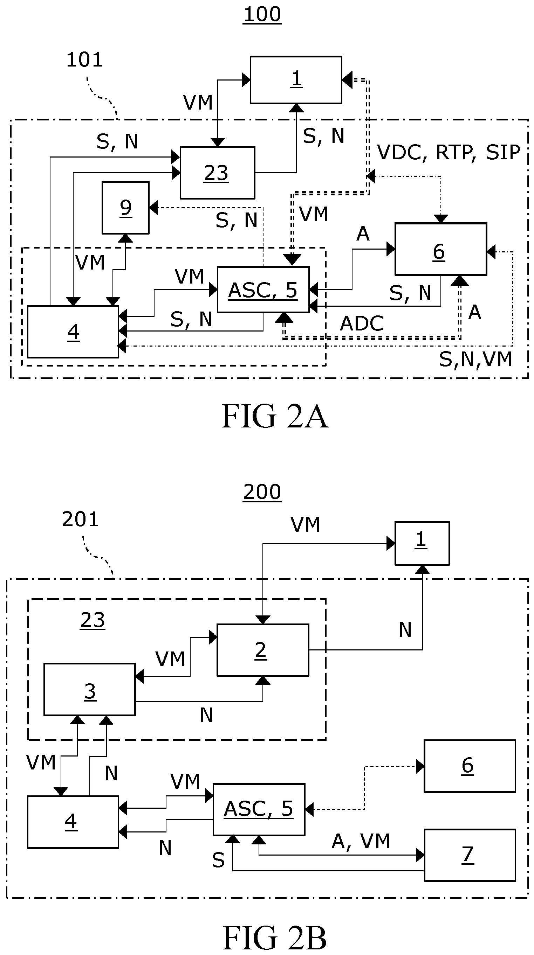

FIG. 2A is a block diagram schematically illustrating a system 100 and methods for crew-passenger communication.

The system 100 is similar to system 90 explained above with regard to Fig. 1C. Vehicle 101 of system 100 is typically also a train providing a plurality of passenger communication devices 6. For sake of clarity, only one passenger communication device 6 shown in Fig. 2A. Further, passenger communication device 6 and audio system 5 may be connected with each other using analog lines.

However, VoIP server 4 of the vehicle 100 is separate to audio system 5 and a controller of audio system 5 (audio system controller, in the following also referred to as ASC), respectively. In the exemplary embodiment, server 4 and (the controller of) audio system 5 are connected with each other via local area network that may be accessed from mobile devices 1 via a wireless interface 23.

Typically, server 4 is provided by a CCG of vehicle 100.

As indicated by the dashed rectangle in Fig. 2A, server 4 and audio system (at least its controller ASC) 5 may alternatively be provided by one physical device and be implemented as respective logical devices, respectively.

When passenger operates passenger communication device 6, for example by pressing a communication request button of passenger communication device 6, a corresponding signal S such as notification N is sent to the controller ASC of audio system 5.

Upon receiving signal S, the controller of audio system 5 may forward (after optional reformatting) the signal S to server 4 via the local area network.

Signal S may be forwarded to a control device or audio device 9 in the driver's cabin for informing a driver operating train 101. In particular, a corresponding message may be displayed on a display connected to the control device, such as a respective Human Machine Interface (HMI) device, and/or the message may be converted into an audio signal (and/or a sound) broadcast by a loudspeaker connected with the control device in the driver's cabin. Signal S may be forwarded to the control device via the local area network and/or via an analogue line (as indicated by the dashed arrow between elements 5, 9).

If the driver is busy he may not respond to the request of the passenger. Instead another crew member such as a conductor may take over and respond. This is because an app running on a mobile device 1, which is connected to the local area network via wireless interface 23, of the other crew member can inform the other crew member of the passenger's request. This may also be achieved by at least one of a message displayed on the display of mobile device 1, a message/notification and/or sound emitted by a loudspeaker of mobile device 1, change of a button displayed and/or popping up on the display of mobile device 1, a vibration alert of mobile device 1 and the like. For this purpose, the app typically provides an interface (in particular an HMI) also allowing for inputs, e.g. via buttons displayed on the display. Alternatively or in addition, the app may allow for voice control.

After a corresponding input to mobile device 1 and the user interface provided by the app running on mobile device 1, respectively, which indicates that the other crew member has decided to answer the passenger's request, a data connection VDC, ADC between mobile device 1 and passenger communication device 6 may be established on request of mobile device 1 and the app, respectively.

In the exemplary embodiment, the established data connection consists of a VoIP data connection VDC between mobile device 1 and the controller of audio system 5, and an analog data connection ADC between the controller of audio system 5 and passenger communication device 6. This is indicated in figure 2A by the two dashed, double lined arrows.

Accordingly, the other crew member and the passenger can talk with each other via the data connection VDC, ADC and exchange voice streams/messages with each other as VolP messages and analogue messages A which are converted by the controller of audio device 5 in this embodiment.

Alternatively, the data connection between mobile device 1 and passenger communication device 6 may completely be established as VoIP data connection VDC via the controller of audio system 5 and server 4, or even directly via server 4. The latter is indicated by dashed dotted arrow in figure 2A.

In both embodiments, the VoIP data connection VDC may include a first VoIP data connection between mobile device 1 and the VoIP server 4, and a second VoIP data connection between the VoIP server 4 and the audio system controller ASC (controller of audio system 5).

Typically, controller or converter 5 hosts a SIP agent for this purpose.

Likewise, mobile device 1 typically also hosts a respective SIP agent, for example as a part of an app, in particular a mobile app running on mobile device 1.

In one embodiment, audio system controller ASC is configured to convert the received VoIP message VM into an analog audio signal A to be broadcast via a loudspeaker of passenger communication device 6.

Alternatively, or in addition, audio system controller ASC may be used for forwarding the VolP message VM to passenger communication device 6 hosting a SIP agent and configured to convert the VoIP message VM into an analogue audio signal and broadcast the analogue audio signal.

Note that the SIP agent on audio system controller ASC typically auto attends to incoming calls for crew-passenger communication.

Note further that server 4 may exchange VolP messages with a SIP agent of mobile device 1 and the public address SIP agent of audio system controller ASC using an RTP protocol, in particular an SRTP protocol.

If the data connection between mobile device 1 and passenger communication device 6 is successfully established, the driver may be informed accordingly, e.g. using the display in the driver's cabin.

FIG. 2B is a block diagram schematically illustrating a system 200 and methods for crew-passenger communication. The system 200 is similar to the system 100 explained above with regard to figure 2A. However, audio system controller ASC of system 200 is connected with two exemplary passenger communication devices 6, 7. Further, it is illustrated in figure 2B that the wireless interface 23 of train 201 typically consists of a router 3 and at least one wireless access point 2, typically a plurality of wireless access points 2.

In the illustrated embodiment, a passenger has operated passenger communication device 7. Upon operating passenger communication devices 7, a corresponding signal S is sent to audio system controller ASC of system 200 which in turn broadcast a corresponding notification N received at connected mobile device 1. As indicated by the dashed arrow between elements 5, 6, passenger communication device 6 may also be operated by passengers. In response, passenger communication device 6 may communicate with audio system controller ASC as explained for passenger communication devices 7.

After establishing a data connection between the mobile device 1 and the passenger communication device 7, which is at least between audio system controller ASC and mobile device 1 implemented as a VoIP data connection (and between audio system controller ASC and the operated passenger communication device 7 either also a VoIP data connection or an analog data connection), the crew member carrying mobile device 1 and the passenger may talk with each other (see the arrows indicating transfer of VoIP messages VM and analog signals A).

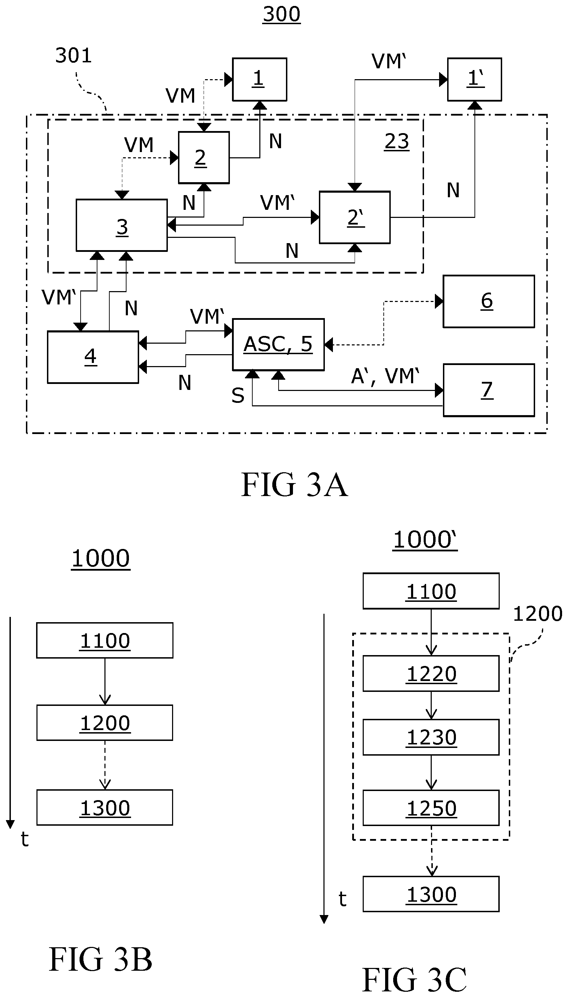

As further illustrated in figure 3A illustrating a system 300 and methods for crew-passenger communication, two, more typically a plurality of wireless access points 2, 2' may be distributed within the train 301.

Accordingly, mobile device 1 of a conductor may have access to the local area network of train 301 from at least almost any point within the train 301.

Further, another crew member, e.g. a further conductor may use a further mobile device 1' to respond to the request/alarm of the passenger, and communicate via server 4 and audio system 5 as indicated by the VoIP message VM' and analog audio signal A' in figure 2A.

FIG. 3B illustrates a flow chart of a method 1000 for providing for crew-passenger communication in a vehicle public passenger transport, in particular a respective railway vehicle (train).

In a block 1100, a mobile device receives a signal typically referring to a changed status of a passenger communication device, in particular a notification informing the mobile device that a passenger is operating or has operated the passenger communication device of the vehicle, for example by pressing a CFA-button of the passenger communication device.

In response, a data connection, which is at least in part is implemented as a VolP data connection, may be established between the mobile device and the passenger communication device in a subsequent block 1200. This is typically initiated by the mobile device and an app running thereon, respectively.

Typically, the VoIP (part of the) data connection is established using a signaling protocol for initiating, maintaining, and terminating real-time sessions for voice applications, in particular the session initiation protocol, SIP, and/or the session description protocol, SDP, for describing session parameters and/or metadata referring to the voice stream.

Thereafter and as indicated by the time arrow t, voice streams may be exchanged between the mobile device and the passenger communication device.

The mobile device is typically a mobile device of a crew member and/or may be pre-registered at VolP server 4 of vehicle 201.

As illustrated in Fig. 3C showing a flow chart of a method 1000' for providing for crew-passenger communication which is typically similar to method 1000', the block 1200 may include several processes 1220 to 1250, in particular establishing a first VoIP data connection between the mobile device and a VoIP server of the vehicle in a block 1220, and establishing a second VoIP data connection between the VoIP server and (a controller of) an audio system of the vehicle in a block 1250.

Mobile device 1 may initiate establishing 1220 the data connection with the audio system using SIP by sending a connection request "SIP INVITE" to the audio system, typically via the VoIP server sending a "SIP INVITE" to the audio system 5 upon receiving the connection request from the mobile device.

In response, the audio system may send a response message "SIP 200 OK" to the mobile device initiating using SIP in a block 1230, typically via the VoIP server sending a "SIP 200 OK" to the mobile device upon receiving the response message from the audio system.

In addition, block 1200 may include establishing a third VoIP or an analogue data connection between (the controller of) the audio system of the vehicle and the operated passenger communication device.

As already explained above, the VolP server is typically provided by a CCG (Crew Communication Gateway) of the vehicle.

Whenever any passenger communication device is operated, the CCG may collect the relevant information from the audio system and pass on the collected information to the connected mobile devices of the crew. Further, a corresponding notification may be sent to the driver display.

The information may include the car from which the alarm/passenger communication device is operated in the train, a specific location in the car, and/or a type information, e.g. whether it corresponds to a CFA/PEA alarm/request.

The app running on the mobile devices may display a list of the operated passenger communication device.

Crew members may select a displayed operated passenger communication device / alarm from the list and acknowledge taking care of the passenger request / alarm.

The audio system and the CCG may pass on the relevant feedback to the (mobile) app to confirm the acknowledgement of the passenger request / alarm.

The running app may than send required information to the CCG, which in turn may send a command to the audio system to select a specific passenger communication device.

Audio system and the CCG may pass on a feedback to the mobile app to confirm the selection of the passenger communication device.

Thereafter, the required communication may be established between the mobile app, the CCG and the audio system.

For this purpose, a crew member may initiate the passenger communication via the user interface for passenger communication provided by the app.

In particular, a preconfigured SIP INVITE may be sent from the app (it's SIP User Agent) to the VoIP Server hosted on the CCG.

The VolP Server on receiving the predefined SIP INVITE from the app may send a SIP INVITE to the audio system's SIP user agent.

On receiving the predefined SIP INVITE, the audio system's SIP user agent may send back a SIP response 200 OK and switch into passenger communication mode.

In one embodiment, the audio system may engage in the passenger communication with the selected passenger communication device via analog channel(s).

Further, the audio system may set the required train level existing signals in the train to indicate the starting of the passenger communication.

During the crew-passenger communication, the audio system may convert incoming VoIP streams into analog streams (signals) and incoming analog streams into VolP streams.

By default, when half-duplex passenger communication begins, the passenger communication device may be in listen mode and the mobile device and app, respectively, may be in speak mode.

The user interface provided in the mobile may also be used to activate/deactivate the speak mode of the passenger communication device.

In particular, a SIP message with message with payload "CmdSetPassComMode=1" may be sent from the app to the VoIP Server subsequently sending the same SIP message to the audio system, more particular the audio system's SIP user agent.

On receiving the SIP Message with payload CmdSetPassComMode=1, the audio system may set the selected passenger communication device in the listen mode.

The audio system, more particular the audio system's SIP user agent may report the current status of the mode as Listen mode by sending a SIP message with message payload 'StatusPassComMode=1'

On receiving this message, the app may set the mobile device in unmute state/ speaking mode.

If the app has unmuted the mobile device again (via the interface), the mobile app may start streaming RTP streams from the mobile device to the audio system via the VolP, and the audio system may convert the RTP stream into an analog stream and stream the analog stream to the selected passenger communication device.

This will result into voice spoken by the crew member to be heard at the selected passenger communication device. Thus, the passenger may listen to the words spoken by the crew member.

Similarly, the user interface provided in the app may be used to activate the listen mode of the mobile device.

In particular, the app may send a SIP message with message payload "CmdSetPassComMode=0" to the VoIP Server subsequently sending the same SIP message to (the SIP agent of ) the audio system.

On receiving this SIP message, the audio system may set the selected passenger communication device in the speak mode.

The audio system may report the current status of the mode as speak mode by sending a SIP message with message payload 'StatusPassComMode=0'.

On receiving this SIP message, the app may set the mobile device in mute state / listening mode.

Once the app has muted the mobile device, the audio system may start converting the analog signals received from the passenger communication device to an RTP stream and streaming the RTP stream from audio system via the VoIP server to the app.

This will result into voice spoken by the passenger into the selected passenger communication device to be broadcast by the mobile device.

Thus, the crew member may listen to the words spoken by the passenger

Subsequently, the crew member may use the interfaces provided by the app to switch between listen and speak mode if desired during the communication with the passenger.

Finally, the crew member may use the interface of the app to terminate the communication.

For this purpose, a "SIP BYE" message may be sent from the app (SIP user agent) to the VoIP server. On receiving, the VoIP server may return a "SIP response 200 OK" to the app and may send a "SIP BYE" message to the audio system (SIP agent) which on (successfully) receiving this message may respond by sending a "SIP response 200 OK" message to the VolP server indicating the end of the communication.

Further, the audio system may set the relevant train level signals to end the crew-passenger communication.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims.

### List of reference numbers

- 1, 1': mobile device
- 2, 2': wireless access point
- 3: (wireless) router
- 4: host / server
- 5: audio system
- 6, 7: passenger communication device / passenger communication unit (PCU)
- 9: display / audio device of driver
- 22: local area network
- 23: wireless interface
- 70, 80, 90, 100, 200, 300: system
- 71, 81, 91, 101, 201, 301: vehicle, train
- 1000-1300: method steps

- A, A': analog audio signal
- ADC: analog data connection
- S: signal
- N: notification
- VM, VM': Voice over IP message / VoIP message
- VDC: VoIP data connection (for RTP/SRTP streams)

## Claims

1. A method (1000, 1000') for crew-passenger communication in a vehicle for public passenger transport, in particular in a respective railway vehicle (71, 81, 91, 101, 201, 301), the vehicle comprising a local area network (22), a wireless interface (2, 3, 23) connected to the local area network (22), a passenger communication device (6, 7), and an audio system (5) connected with the local area network (22) and the passenger communication device (6, 7), the method comprising:
- receiving (1100), on a mobile device (1, 1') of a crew member which is connected via the wireless interface (2, 3, 23) to the local area network (22), a signal (S), in particular a notification (N) when the passenger communication device (6, 7) is operated and/or has been operated by a passenger; and
- establishing (1200) a data connection (DC, VDC, ADC) between the mobile device (1, 1') and the passenger communication device (6, 7), at least a part of the data connection (DC, VDC, ADC) being a VolP data connection (VDC) wherein the data connection comprises a VoIP data connection between the mobile device (1, 1') and the audio system (5) via a VoIP server (4) provided by the vehicle and connected to the local area network (22).

2. The method of claim 1, further comprising at least one of:
- exchanging (1300) a voice stream (VM, VM', A, A') between the mobile device (1, 1') and the passenger communication device (6, 7); and
- sending or forwarding the signal (S) to the mobile device (1, 1') via the VolP server (4), typically by the audio system (5), the signal (S) typically being indicative for a change of a status of the passenger communication device (6, 7) and/or an activation of the passenger communication device (6, 7), or wherein the signal (S) is an incoming call notification (SIP-INVITE), the signal (S) typically being sent or forwarded to the mobile device (1, 1') upon receiving, from the passenger communication device (6, 7), a signal indicative for a change of a status of the passenger communication device (6, 7).

3. The method of claim 1 or 2, wherein the data connection comprises a further VolP data connection between the audio system (5) and the passenger communication device (6, 7) or an analog data connection (ADC) between the audio system (5) and the passenger communication device (6, 7), and/or wherein the respective VolP data connection is configured to use a real-time transport protocol, RTP, in particular a secure real-time transport protocol, SRTP, for transferring and/or exchanging voice messages as respective VolP messages (VM, VM').

4. The method of any of the claims 2 to 3, wherein the voice stream (VM, VM') comprises an RTP-stream, in particular an SRTP-stream, wherein exchanging (1300) the voice stream (VM, VM', A, A') comprises at least one of:
- converting an analog audio signal (A, A'), in particular an analog audio signal (A, A') referring to a voice message into RTP-packets for the RTP-stream; and
- converting the packets of the RTP-stream into a respective analog audio signal (A, A'),
wherein the respective converting is typically performed by at least one of a controller of the audio system (5), an audio converter of the audio system (5), in particular a train amplifier of the audio system (5), or the passenger communication device (6, 7).

5. The method of any of the claims 2 to 4, prior to exchanging (1300) the voice stream (VM, VM', A, A') comprising establishing the data connection using a signaling protocol for initiating, maintaining, and terminating real-time sessions for voice applications, in particular the session initiation protocol, SIP, and/or the session description protocol, SDP, for describing session parameters and/or metadata referring to the voice stream.

6. The method of any preceding claim, wherein at least one of the mobile device (1, 1'), the passenger communication device (6, 7), the audio system (5) and the VolP server (4) provides SIP-functionality and VoIP-functionality, and/or wherein the mobile device (1, 1') initiates establishing the data connection with the audio system (5) via the VoIP server (4), in particular by sending a connection request (S, SIP INVITE) to the audio system (5) via the VoIP server (4), and wherein the audio system (5), on or after successfully receiving the connection request (S, SIP INVITE), sends a response message (S, SIP 200 OK) to the mobile device (1, 1'), via the VoIP server (4).

7. The method of any preceding claim, wherein the VoIP data connection (VDC) is, depending on a respective functionality of the passenger communication device (6, 7), established as a full-duplex VoIP data connection or a half-duplex VoIP data connection, and/or wherein establishing (1200) the data connection, when the passenger communication device (6, 7) is configured for half-duplex VolP data connection, comprises at least one of:
o setting the mobile device (1, 1') into a speak mode for the data connection (DC, VDC, ADC), typically comprising at least one of:
o sending a first communication initializing message, in particular a respective SIP-message, e.g. "CmdSetPassComMode=1", from the mobile device (1, 1') to the audio system (5), typically via the VoIP server (4); and
o sending a third communication initializing message, in particular a respective SIP-message, e.g. "StatusPassComMode=1", from the audio system (5) to the mobile device (1, 1'), typically via the VoIP server (4); and
o setting the mobile device (1, 1') into a listen mode for the data connection (DC, VDC, ADC), typically comprising at least one of:
o sending a second communication initializing message, in particular a respective SIP-message, e.g. "CmdSetPassComMode=0", from the mobile device (1, 1') to the audio system (5), typically via the VoIP server (4); and
o sending a fourth communication initializing message, in particular a respective SIP-message, e.g. "StatusPassComMode=0", from the audio system (5) to the mobile device (1, 1'), typically via the VoIP server (4).

8. A system (70, 80, 90, 100, 200, 300) for crew-passenger communication in a vehicle for public passenger transport, in particular in a respective railway vehicle (71, 81, 91, 101, 201, 301), the system comprising:
- a wireless interface (2, 3, 23) provided by the vehicle (71, 81, 91, 101, 201, 301), and connected to a local area network (22) of the vehicle (71, 81, 91, 101, 201, 301);
- a VolP server (4) provided by the vehicle (71, 81, 91, 101, 201, 301), and connected to the local area network (22);
- a passenger communication device (6, 7) provided by the vehicle (71, 81, 91, 101, 201, 301), and configured to be operated by a passenger;
- an audio system (5) provided by the vehicle (101, 201, 301), and connected with the local area network (22) and the passenger communication device (6, 7); and
- a mobile device (1, 1') of a crew member which is connectable to the local area network (22) via the wireless interface (2, 3, 23), and, when connected to the local area network (22) via the wireless interface (2, 3, 23), configured to receive a signal (S), in particular a notification (N, N') when the passenger communication device (6, 7) is operated and/or has been operated by the passenger, and to request establishing (1200) a data connection (DC, VDC, ADC) between the mobile device (1, 1') and the passenger communication device (6, 7), at least a part of the data connection (DC, VDC, ADC) being a VoIP data connection (VDC), the data connection comprising a VoIP data connection between the mobile device (1, 1') and the audio system (5) via the VolP server (4).

9. The system of claim 8, wherein the audio system (5) is configured to at least one of:
o receive, from the passenger communication device (6, 7), a signal (S) referring to an operational status of the passenger communication device (6, 7) or a change of the operational status, in particular a respective status information referring to an operational status of a button of the passenger communication device (6, 7);
o forward the signal (S) via the local area network (22);
o receive and/or forward RTP-streams via the local area network (22);
o convert an analog audio signal (A, A'), in particular an analog audio signal (A, A') referring to a voice message into an RTP-stream, in particular an SRTP-stream; and
o convert the packets of the RTP-stream into a respective analog audio signal (A, A').

10. The system of claim 8 or 9, wherein the VoIP server (4) is configured to at least one of:
- initiate establishing at least a part of the VoIP data connection, in particular a VoIP data connection with the audio system (5);
- maintain the established VolP data connection;
- terminate the established VolP data connection;
- communicate with the mobile device (1, 1') and the audio system (5) using RTP, in particular SRTP; and
- create a notification (N), in particular an alert notification, and forward the notification (N) via the local area network (22) when an operational status of the passenger communication device (6, 7) has changed; and/or
wherein the audio system (5) is configured to at least one of:
- initiating, upon receiving, from the mobile device (1, 1'), via the VolP server (4), a first communication initializing message, in particular a respective SIP-message, e.g. "CmdSetPassComMode=1", setting the passenger communication device (6, 7) into a listen mode for the data connection (DC, VDC, ADC); and
- initiating, upon receiving, from the mobile device (1, 1'), via the VolP server (4), a second communication initializing message, in particular a respective SIP-message, e.g. "CmdSetPassComMode=0", setting the passenger communication device (6, 7) into a speak mode for the data connection (DC, VDC, ADC).

11. The system of any of the claims 8 to 10, wherein the mobile device (1, 1') is a smartphone or a tablet computer, and/or wherein the system is configured to perform the method of any of the claims 1 to 8, and/or wherein the local area network (22) is a wired data network and/or uses the Internet Protocol and/or Ethernet technology .

12. The system of any of the claims 8 to 11, wherein the mobile device (1, 1') comprises an app which is, when running on the mobile device (1, 1'), configured to:
- create an entry in a locally stored list or database and/or display a message and/or the notification (N) on a screen of the mobile device (1, 1') upon receiving the signal (S);
- create and/or activate at least one button on the screen upon receiving the signal (S) or when a user of the mobile device (1, 1') responds to the displayed message or a display of the entry in a predefined manner; and/or
- initialize establishing the data connection (VDC), typically via the VoIP server (4).

13. The system of claim 12, wherein the at least one button allows for at least one of:
- selecting, for the mobile device (1, 1'), a speak mode for the data connection (DC, VDC, ADC);
- selecting, for the mobile device (1, 1'), a listen mode for the data connection (DC, VDC, ADC);
- initializing establishing the data connection (DC, VDC, ADC); and
- initializing terminating the data connection (DC, VDC, ADC).

14. The system of any of the claims 10 to 13, wherein the mobile device (1, 1') is, when connected, configured, typically via the app, to at least one of:
- sending the first communication initializing message if the speak mode is selected;
- sending the second communication initializing message if the listen mode is selected;
- upon receiving from the audio system (5), via the VoIP server (4), a third communication initializing message, in particular a respective SIP-message, e.g. "StatusPassComMode=1", enabling the speak mode of the mobile device (1, 1') for the data connection (DC, VDC, ADC); and
- upon receiving from the audio system (5), via the VoIP server (4), a fourth communication initializing message, in particular respective SIP-message, e.g. "StatusPassComMode=0", enabling the listen mode of the mobile device (1, 1') for the data connection (DC, VDC, ADC).

15. The system of any of the claims 8 to 14, wherein at least one of the VoIP server (4), the mobile device (1, 1'), the app, and the audio system (5) is configured to use at least one of a session initiation protocol, SIP, a real time transmission protocol, RTP, in particular SRTP, and a session description protocol, SDP, and/or wherein at least one of the mobile device, the app, the audio system (5), and the passenger communication device (6) is operable as a SIP-user agent, and/or wherein the VolP server (4) is provided by one or more computer devices of a passenger comfort system of the vehicle (71, 81, 91, 101, 201, 301), and/or wherein the audio system (5) comprises an audio converter configured to convert the VoIP message (VM, VM') into an analog audio signal (AM), in particular a train amplifier, and/or wherein at least one of the VolP server (4), the audio converter and the audio system (5) are implemented as a respective logical device.

## Patentansprüche

1. Verfahren (1000, 1000') zur Kommunikation zwischen Besatzung und Passagieren in einem Fahrzeug für den öffentlichen Personenverkehr, insbesondere in einem entsprechenden Schienenfahrzeug (71, 81, 91, 101, 201, 301), wobei das Fahrzeug ein lokales Netzwerk (22), eine mit dem lokalen Netzwerk (22) verbundene drahtlose Schnittstelle (2, 3, 23), ein Passagierkommunikationsgerät (6, 7) und ein mit dem lokalen Netzwerk (22) und dem Passagierkommunikationsgerät (6, 7) verbundenes Audiosystem (5) bereitstellt, wobei das Verfahren aufweist:
- Empfangen (1100) eines Signals (S), insbesondere einer Benachrichtigung (N), auf einem Mobilgerät (1, 1') eines Besatzungsmitglieds, das über die drahtlose Schnittstelle (2, 3, 23) mit dem lokalen Netzwerk (22) verbunden ist, wenn das Passagierkommunikationsgerät (6, 7) von einem Passagier bedient wird und/oder bedient wurde; und
- Herstellen (1200) einer Datenverbindung (DC, VDC, ADC) zwischen dem Mobilgerät (1, 1') und dem Passagierkommunikationsgerät (6, 7), wobei zumindest ein Teil der Datenverbindung (DC, VDC, ADC) eine VoIP-Datenverbindung (VDC) ist, und wobei die Datenverbindung eine VoIP-Datenverbindung zwischen dem Mobilgerät (1, 1') und dem Audiosystem (5) über einen vom Fahrzeug bereitgestellten und mit dem lokalen Netzwerk (22) verbundenen VolP-Server (4) aufweist.

2. Das Verfahren nach Anspruch 1, das weiter mindestens eines von Folgendem aufweist:
- Austauschen (1300) eines Sprachstroms (VM, VM', A, A') zwischen dem Mobilgerät (1, 1') und der Passagierkommunikationsgerät (6, 7); und
- Senden oder Weiterleiten des Signals (S) an das Mobilgerät (1, 1') über den VolP-Server (4), typischerweise durch das Audiosystem (5), wobei das Signal (S) typischerweise eine Änderung eines Status des Passagierkommunikationsgeräts (6, 7) und/oder eine Aktivierung des Passagierkommunikationsgeräts (6, 7) anzeigt, oder wobei das Signal (S) eine Benachrichtigung über einen eingehenden Anruf (SIP-INVITE) ist, wobei das Signal (S) typischerweise an das Mobilgerät (1, 1') gesendet oder weitergeleitet wird, wenn vom Passagierkommunikationsgerät (6, 7) ein Signal empfangen wird, das eine Änderung eines Status des Passagierkommunikationsgeräts (6, 7) anzeigt.

3. Verfahren nach Anspruch 1 oder 2, wobei die Datenverbindung eine weitere VoIP-Datenverbindung zwischen dem Audiosystem (5) und der Passagierkommunikationsgerät (6, 7) oder eine analoge Datenverbindung (ADC) zwischen dem Audiosystem (5) und der Passagierkommunikationsgerät (6, 7) aufweist, und/oder wobei die jeweilige VolP-Datenverbindung so konfiguriert ist, dass sie ein Echtzeit-Transportprotokoll, RTP, insbesondere ein sicheres Echtzeit-Transportprotokoll, SRTP, zum Übertragen und/oder Austauschen von Sprachmeldungen als jeweilige VolP-Meldungen (VM, VM') verwendet.

4. Verfahren nach einem der Ansprüche 2 bis 3, wobei der Sprachstrom (VM, VM') einen RTP-Strom, insbesondere einen SRTP-Strom, aufweist, wobei das Austauschen (1300) des Sprachstroms (VM, VM', A, A') mindestens eines der folgenden Schritte aufweist:
- Umwandeln eines analogen Audiosignals (A, A'), insbesondere eines analogen Audiosignals (A, A'), das sich auf eine Sprachmeldung bezieht, in RTP-Pakete für den RTP-Stream; und
- Umwandeln der Pakete des RTP-Streams in ein entsprechendes analoges Audiosignal (A, A'),
wobei die jeweilige Umwandlung typischerweise durch von einer Steuereinrichtung des Audiosystems (5), einem Audiokonverter des Audiosystems (5), insbesondere einem Zugverstärker des Audiosystems (5), und/oder dem Passagierkommunikationsgerät (6, 7) durchgeführt wird.

5. Verfahren nach einem der Ansprüche 2 bis 4, wobei vor dem Austauschen (1300) des Sprachstroms (VM, VM', A, A') der Aufbau der Datenverbindung unter Verwendung eines Signalisierungsprotokolls zum Initiieren, Aufrechterhalten und Beenden von Echtzeitsitzungen für Sprachanwendungen, insbesondere des Session Initiation Protocol, SIP, und/oder des Session Description Protocol, SDP, zum Beschreiben von Parametern und/oder Metadaten, die sich auf den Sprachstrom beziehen, erfolgt.

6. Verfahren nach einem der vorstehenden Ansprüche, wobei das Mobilgerät (1, 1'), das Passagierkommunikationsgerät (6, 7), das Audiosystem (5) und/oder der VoIP-Server (4) SIP-Funktionalität und VolP-Funktionalität bereitstellen, und/oder wobei das Mobilgerät (1, 1') die Herstellung der Datenverbindung mit dem Audiosystem (5) über den VolP-Server (4) initiiert, insbesondere durch Senden einer Verbindungsanforderung (S, SIP INVITE) an das Audiosystem (5) über den VolP-Server (4), und wobei das Audiosystem (5) mit dem oder nach dem erfolgreichen Empfangen der Verbindungsanforderung (S, SIP INVITE) eine Antwortnachricht (S, SIP 200 OK) an das Mobilgerät (1, 1') über den VolP-Server (4) eine Antwortnachricht (S, SIP 200 OK) sendet.

7. Verfahren nach einem der vorstehenden Ansprüche, wobei die VoIP-Datenverbindung (VDC) in Abhängigkeit von einer jeweiligen Funktionalität des Passagierkommunikationsgeräts (6, 7) als VoIIduplex-VoIP-Datenverbindung oder als Halbduplex-VolP-Datenverbindung hergestellt wird und/oder wobei das Herstellen (1200) der Datenverbindung, wenn das Passagierkommunikationsgerät (6, 7) für eine Halbduplex-VoIP-Datenverbindung konfiguriert ist, mindestens eines der folgenden Schritte aufweist:
o das Einstellen des Mobilgeräts (1, 1') in einen Sprechmodus für die Datenverbindung (DC, VDC, ADC), typischerweise aufweisend mindestens eines von:
o Senden einer ersten Kommunikationsinitialisierungsnachricht, insbesondere einer entsprechenden SIP-Nachricht, z. B. "CmdSetPassComMode=1", vom Mobilgerät (1, 1') an das Audiosystem (5), typischerweise über den VolP-Server (4); und
o Senden einer dritten Kommunikationsinitialisierungsnachricht, insbesondere einer entsprechenden SIP-Nachricht, z. B. "StatusPassComMode=1", vom Audiosystem (5) an das Mobilgerät (1, 1'), typischerweise über den VolP-Server (4); und
∘ Versetzen des Mobilgeräts (1, 1') in einen Empfangsmodus für die Datenverbindung (DC, VDC, ADC), typischerweise aufweisend mindestens eines von:
∘ Senden einer zweiten Kommunikationsinitialisierungsnachricht, insbesondere einer entsprechenden SIP-Nachricht, z. B. "CmdSetPassComMode=0", vom Mobilgerät (1, 1') an das Audiosystem (5), typischerweise über den VolP-Server (4); und
o Senden einer vierten Kommunikationsinitialisierungsnachricht, insbesondere einer entsprechenden SIP-Nachricht, z. B. "StatusPassComMode=0", vom Audiosystem (5) an das Mobilgerät (1, 1'), typischerweise über den VolP-Server (4).

8. System (70, 80, 90, 100, 200, 300) für die Kommunikation zwischen Besatzung und Passagieren in einem Fahrzeug für den öffentlichen Personenverkehr, insbesondere in einem jeweiligen Schienenfahrzeug (71, 81, 91, 101, 201, 301), wobei das System aufweist:
- eine drahtlose Schnittstelle (2, 3, 23), die vom Fahrzeug (71, 81, 91, 101, 201, 301) bereitgestellt wird und mit einem lokalen Netzwerk (22) des Fahrzeugs (71, 81, 91, 101, 201, 301) verbunden ist;
- einen VolP-Server (4), der vom Fahrzeug (71, 81, 91, 101, 201, 301) bereitgestellt wird und mit dem lokalen Netzwerk (22) verbunden ist;
- ein vom Fahrzeug (71, 81, 91, 101, 201, 301) bereitgestelltes Passagierkommunikationsgerät (6, 7), das so konfiguriert ist, dass es von einem Passagier bedient werden kann;
- ein vom Fahrzeug (101, 201, 301) bereitgestelltes Audiosystem (5), das mit dem lokalen Netzwerk (22) und dem Passagierkommunikationsgerät (6, 7) verbunden ist; und
- eine Mobilgerät (1, 1') eines Besatzungsmitglieds, das über die drahtlose Schnittstelle (2, 3, 23) mit dem lokalen Netzwerk (22) verbunden werden kann und, wenn sie über die drahtlose Schnittstelle (2, 3, 23) mit dem lokalen Netzwerk (22) verbunden ist, so konfiguriert ist, dass es ein Signal (S), insbesondere eine Benachrichtigung (N, N'), empfängt, wenn das Passagierkommunikationsgerät (6, 7) vom Passagier bedient wird und/oder bedient wurde, und dass es die Herstellung (1200) einer Datenverbindung (DC, VDC, ADC) zwischen dem Mobilgerät (1, 1') und dem Passagierkommunikationsgerät (6, 7) anfordert, wobei zumindest ein Teil der Datenverbindung (DC, VDC, ADC) eine VolP-Datenverbindung (VDC) ist, und wobei die Datenverbindung eine VolP-Datenverbindung aufweist, die zwischen dem Mobilgerät (1, 1') und dem Audiosystem (5) über den VoIP-Server (4) besteht.

9. System nach Anspruch 8, wobei das Audiosystem (5) so konfiguriert ist mindestens eines von Folgendem auszuführen:
o Empfangen eines Signals (S) vom Passagierkommunikationsgerät (6, 7), das sich auf einen Betriebsstatus des Passagierkommunikationsgeräts (6, 7) oder eine Änderung des Betriebsstatus bezieht, insbesondere einer jeweiligen Statusinformation, die sich auf einen Betriebsstatus einer Taste des Passagierkommunikationsgeräts (6, 7) bezieht;
o Weiterleiten des Signals (S) über das lokale Netzwerk (22);
o Empfangen und/oder Weiterleiten von RTP-Strömen über das lokale Netzwerk (22);
o Umwandeln eines analogen Audiosignals (A, A'), insbesondere eines analogen Audiosignals (A, A'), das sich auf eine Sprachmeldung bezieht, in einen RTP-Stream, insbesondere einen SRTP-Stream; und
o Umwandeln der Pakete des RTP-Streams in ein entsprechendes analoges Audiosignal (A, A'),

10. Das System nach Anspruch 8 oder 9, wobei der VolP-Server (4) so konfiguriert ist mindestens eines von Folgendem auszuführen:
- Einleiten des Aufbaus zumindest eines Teils der VolP-Datenverbindung, insbesondere einer VolP-Datenverbindung mit dem Audiosystem (5);
- Aufrechtzuerhalten der aufgebauten VoIP-Datenverbindungen;
- Beenden der aufgebauten VoIP-Datenverbindung;
- Kommunizieren mit dem Mobilgerät (1, 1') und dem Audiosystem (5) unter Verwendung von RTP, insbesondere SRTP; und
- Erstellen einer Benachrichtigung (N), insbesondere einer Alarmbenachrichtigung, und Weiterleiten der Benachrichtigung (N) über das lokale Netzwerk (22), wenn sich ein Betriebsstatus der Passagierkommunikationsgerät (6, 7) geändert hat; und/oder
wobei das Audiosystem (5) für mindestens eines von Folgendem konfiguriert ist:
- nach dem Empfangen einer ersten Kommunikationsinitialisierungsnachricht, insbesondere einer entsprechenden SIP-Nachricht, z. B. "CmdSetPassComMode=1", vom Mobilgerät (1, 1') über den VolP-Server (4) das Passagierkommunikationsgerät (6, 7) in einen Empfangsmodus für die Datenverbindung (DC, VDC, ADC) zu versetzen; und
- nach dem Empfangen einer zweiten Kommunikationsinitialisierungsnachricht, insbesondere einer entsprechenden SIP-Nachricht, z. B. "CmdSetPassComMode=0", vom Mobilgerät (1, 1') über den VolP-Server (4) das Passagierkommunikationsgerät in einen Sprechmodus für die Datenverbindung (DC, VDC, ADC) zu versetzen.

11. Das System nach einem der Ansprüche 8 bis 10, wobei die Mobilgerät (1, 1') ein Smartphone oder ein Tablet-Computer ist und/oder wobei das System so konfiguriert ist, dass es das Verfahren nach einem der Ansprüche 1 bis 8 ausführt, und/oder wobei das lokale Netzwerk (22) ein kabelgebundenes Datennetzwerk ist und/oder das Internetprotokoll und/oder die Ethernet-Technologie verwendet.

12. Das System nach einem der Ansprüche 8 bis 11, wobei die Mobilgerät (1, 1') eine App aufweist, die, wenn sie auf der Mobilgerät (1, 1') ausgeführt wird, konfiguriert ist zum:
- Erstellen eines Eintrags in einer lokal gespeicherten Liste oder Datenbank und/oder Anzeigen einer Meldung und/oder der Benachrichtigung (N) auf einem Bildschirm des Mobilgeräts (1, 1') nach Empfangen des Signals (S);
- Erstellen und/oder Aktivieren mindestens einer Schaltfläche auf dem Bildschirm, nachdem das Signal (S) empfangen wurde, oder wenn ein Nutzer des Mobilgeräts (1, 1') auf die angezeigte Meldung oder eine Anzeige des Eintrags in einer vordefinierten Weise reagiert; und/oder
- Initialisierung des Aufbaus der Datenverbindung (VDC), typischerweise über den VolP-Server (4).

13. Das System nach Anspruch 12, wobei die mindestens eine Schaltfläche mindestens eines von Folgendem ermöglicht:
- Auswählen für das Mobilgerät (1, 1') eines Sprechmodus für die Datenverbindung (DC, VDC, ADC);
- Auswählen für das Mobilgerät (1, 1') eines Hörmodus für die Datenverbindung (DC, VDC, ADC);
- Initialisieren des Aufbaus der Datenverbindung (DC, VDC, ADC); und
- Initialisieren eines Beenden der Datenverbindung (DC, VDC, ADC).

14. Das System nach einem der Ansprüche 10 bis 13, wobei das Mobilgerät (1, 1'), wenn es verbunden ist, typischerweise über die App, für mindestens eines von Folgendem konfiguriert ist:
- Senden der ersten Kommunikationsinitialisierungsnachricht, wenn der Sprechmodus ausgewählt ist;
- Senden der zweiten Kommunikationsinitialisierungsnachricht, wenn der Hörmodus ausgewählt ist;
- nach dem Empfangen einer dritten Kommunikationsinitialisierungsnachricht, insbesondere einer entsprechenden SIP-Nachricht, z. B. "StatusPassComMode=1", vom Audiosystem (5) über den VolP-Server (4) den Sprechmodus der Mobilgerät (1, 1') für die Datenverbindung (DC, VDC, ADC) zu aktivieren; und
- nach Empfangen einer vierten Kommunikationsinitialisierungsnachricht, insbesondere einer entsprechenden SIP-Nachricht, z. B. "StatusPassComMode=0", vom Audiosystem (5) über den VolP-Server (4) den Hörmodus der Vorrichtung (1, 1') für die Datenverbindung (DC, VDC, ADC) zu aktivieren.

15. Das System nach einem der Ansprüche 8 bis 14, wobei der VolP-Server (4), das Mobilgerät (1, 1'), die App und/oder das Audiosystem (5) so konfiguriert ist, dass es mindestens eines aus einem Sitzungsinitiierungsprotokoll, SIP, einem Echtzeit-Transportprotokoll, RTP, insbesondere SRTP, und einem Sitzungsbeschreibungsprotokoll, SDP, verwenden kann, und/oder wobei mindestens eines aus dem Mobilgerät, der App, dem Audiosystem (5) und dem Passagierkommunikationsgerät (6) als SIP-Nutzer-Agent betreibbar ist, und/oder wobei der VolP-Server (4) durch eine oder mehrere Computervorrichtungen eines Passagierkomfortsystems des Fahrzeugs (71, 81, 91, 101, 201, 301) bereitgestellt wird, und/oder wobei das Audiosystem (5) einen Audiokonverter, der so konfiguriert ist, dass er die VolP-Nachricht (VM, VM') in ein analoges Audiosignal (AM) umwandeln kann, insbesondere einen Zugverstärker aufweist, und/oder wobei mindestens einer der VolP-Server (4), der Audiokonverter und das Audiosystem (5) als jeweiliges logisches Gerät implementiert sind.

## Revendications

1. Procédé (1000, 1000') de communication entre le personnel de bord et les passagers dans un véhicule de transport public de passagers, notamment dans un véhicule ferroviaire (71, 81, 91, 101, 201, 301) respectif, le véhicule comprenant un réseau local (22), une interface sans fil (2, 3, 23) connectée au réseau local (22), un dispositif de communication avec les passagers (6, 7), et un système audio (5) connecté au réseau local (22) et au dispositif de communication avec les passagers (6, 7), le procédé comprenant :
- la réception (1100), sur un dispositif mobile (1, 1') d'un membre du personnel de bord qui est connecté par l'intermédiaire de l'interface sans fil (2, 3, 23) au réseau local (22), d'un signal (S), notamment d'une notification (N), lorsque le dispositif de communication avec les passagers (6, 7) est utilisé et/ou a été utilisé par un passager ; et
- l'établissement (1200) d'une connexion de données (DC, VDC, ADC) entre le dispositif mobile (1, 1') et le dispositif de communication avec les passagers (6, 7), au moins une partie de la connexion de données (DC, VDC, ADC) étant une connexion de données VolP (VDC), dans lequel la connexion de données comprend une connexion de données VolP entre le dispositif mobile (1, 1') et le système audio (5) par l'intermédiaire d'un serveur VolP (4) fourni par le véhicule et connecté au réseau local (22).

2. Procédé selon la revendication 1, comprenant en outre au moins l'un parmi :
- l'échange (1300) d'un flux vocal (VM, VM', A, A') entre le dispositif mobile (1, 1') et le dispositif de communication avec les passagers (6, 7) ; et
- l'envoi ou l'acheminement du signal (S) au dispositif mobile (1, 1') par l'intermédiaire du serveur VolP (4), typiquement par le système audio (5), le signal (S) indiquant typiquement un changement d'un état du dispositif de communication avec les passagers (6, 7) et/ou une activation du dispositif de communication avec les passagers (6, 7), ou dans lequel le signal (S) est une notification d'appel entrant (SIP-INVITE), le signal (S) étant typiquement envoyé ou acheminé au dispositif mobile (1, 1') lors de la réception, en provenance du dispositif de communication avec les passagers (6, 7), d'un signal indiquant un changement d'un état du dispositif de communication avec les passagers (6, 7).

3. Procédé selon la revendication 1 ou 2, dans lequel la connexion de données comprend une connexion de données VolP supplémentaire entre le système audio (5) et le dispositif de communication avec les passagers (6, 7) ou une connexion de données analogiques (ADC) entre le système audio (5) et le dispositif de communication avec les passagers (6, 7), et/ou dans lequel la connexion de données VolP respective est configurée pour utiliser un protocole de transport en temps réel, RTP, notamment un protocole de transport en temps réel sécurisé, SRTP, pour transférer et/ou échanger des messages vocaux en tant que messages VoIP (VM, VM') respectifs.

4. Procédé selon l'une quelconque des revendications 2 à 3, dans lequel le flux vocal (VM, VM') comprend un flux RTP, notamment un flux SRTP, dans lequel l'échange (1300) du flux vocal (VM, VM', A, A') comprend au moins l'une parmi :
- la conversion d'un signal audio analogique (A, A'), notamment un signal audio analogique (A, A') se rapportant à un message vocal, en paquets RTP pour le flux RTP ; et
- la conversion des paquets du flux RTP en un signal audio analogique (A, A') respectif,
dans lequel la conversion respective est typiquement réalisée par au moins l'un parmi un dispositif de commande du système audio (5), un convertisseur audio du système audio (5), notamment un amplificateur de train du système audio (5), ou le dispositif de communication avec les passagers (6, 7).

5. Procédé selon l'une quelconque des revendications 2 à 4, comprenant, avant l'échange (1300) du flux vocal (VM, VM', A, A'), l'établissement de la connexion de données à l'aide d'un protocole de signalisation pour initier, maintenir et terminer des sessions en temps réel pour des applications vocales, notamment le protocole d'initiation de session, SIP, et/ou le protocole de description de session, SDP, pour décrire des paramètres de session et/ou des métadonnées se rapportant au flux vocal.

6. Procédé selon une quelconque revendication précédente, dans lequel au moins l'un parmi le dispositif mobile (1, 1'), le dispositif de communication avec les passagers (6, 7), le système audio (5) et le serveur VoIP (4) fournit une fonctionnalité SIP et une fonctionnalité VolP, et/ou dans lequel le dispositif mobile (1, 1') initie l'établissement de la connexion de données avec le système audio (5) par l'intermédiaire du serveur VoIP (4), notamment en envoyant une demande de connexion (S, SIP INVITE) au système audio (5) par l'intermédiaire du serveur VolP (4), et dans lequel le système audio (5), lors de la réception ou après avoir reçu avec succès la demande de connexion (S, SIP INVITE), envoie un message de réponse (S, SIP 200 OK) au dispositif mobile (1, 1'), par l'intermédiaire du serveur VoIP (4).

7. Procédé selon une quelconque revendication précédente, dans lequel la connexion de données VolP (VDC) est, en fonction d'une fonctionnalité respective du dispositif de communication avec les passagers (6, 7), établie en tant que connexion de données VolP duplex intégral ou une connexion de données VoIP semi-duplex, et/ou dans lequel l'établissement (1200) de la connexion de données, lorsque le dispositif de communication avec les passagers (6, 7) est configuré pour une connexion de données VolP semi-duplex, comprend au moins l'un parmi :
∘ le réglage du dispositif mobile (1, 1') sur un mode de parole pour la connexion de données (DC, VDC, ADC), comprenant typiquement au moins l'un parmi :
∘ l'envoi d'un premier message d'initialisation de communication, notamment un message SIP respectif, par ex. "CmdSetPassComMode=1", du dispositif mobile (1, 1') au système audio (5), typiquement par l'intermédiaire du serveur VolP (4) ; et
∘ l'envoi d'un troisième message d'initialisation de communication, notamment un message SIP respectif, par ex. "StatusPassComMode=1", du système audio (5) au dispositif mobile (1, 1'), typiquement par l'intermédiaire du serveur VoIP (4) ; et
∘ le réglage du dispositif mobile (1, 1') sur un mode d'écoute pour la connexion de données (DC, VDC, ADC), comprenant typiquement au moins l'un parmi :
∘ l'envoi d'un deuxième message d'initialisation de communication, notamment un message SIP respectif, par ex. "CmdSetPassComMode=0", du dispositif mobile (1, 1') au système audio (5), typiquementpar l'intermédiaire du serveur VolP (4) ; et
o l'envoi d'un quatrième message d'initialisation de communication, notamment un message SIP respectif, par ex. "StatusPassComMode=0", du système audio (5) au dispositif mobile (1, 1'), typiquement par l'intermédiaire du serveur VoIP (4).

8. Système (70, 80, 90, 100, 200, 300) de communication entre le personnel de bord et les passagers dans un véhicule de transport public de passagers, notamment dans un véhicule ferroviaire (71, 81, 91, 101, 201, 301) respectif, le système comprenant :
- une interface sans fil (2, 3, 23) fournie par le véhicule (71, 81, 91, 101, 201, 301) et connectée à un réseau local (22) du véhicule (71, 81, 91, 101, 201, 301) ;
- un serveur VolP (4) fourni par le véhicule (71, 81, 91, 101, 201, 301) et connecté au réseau local (22) ;
- un dispositif de communication avec les passagers (6, 7) fourni par le véhicule (71, 81, 91, 101, 201, 301) et configuré pour être utilisé par un passager ;
- un système audio (5) fourni par le véhicule (101, 201, 301) et connecté au réseau local (22) et au dispositif de communication avec les passagers (6, 7) ; et
- un dispositif mobile (1, 1') d'un membre du personnel de bord qui peut être connecté au réseau local (22) par l'intermédiaire de l'interface sans fil (2, 3, 23), et, lorsqu'il est connecté au réseau local (22) par l'intermédiaire de l'interface sans fil (2, 3, 23), configuré pour recevoir un signal (S), notamment une notification (N, N') lorsque le dispositif de communication avec les passagers (6, 7) est utilisé et/ou a été utilisé par le passager, et pour demander l'établissement (1200) d'une connexion de données (DC, VDC, ADC) entre le dispositif mobile (1, 1') et le dispositif de communication avec les passagers (6, 7), au moins une partie de la connexion de données (DC, VDC, ADC) étant une connexion de données VoIP (VDC), la connexion de données comprenant une connexion de données VolP entre le dispositif mobile (1, 1') et le système audio (5) par l'intermédiaire du serveur VoIP (4).

9. Système selon la revendication 8, dans lequel le système audio (5) est configuré pour réaliser au moins l'une action parmi :
∘ la réception, en provenance du dispositif de communication avec les passagers (6, 7), d'un signal (S) se rapportant à un état de fonctionnement du dispositif de communication avec les passagers (6, 7) ou à un changement de l'état de fonctionnement, notamment des informations d'état respectives se rapportant à un état de fonctionnement d'un bouton du dispositif de communication avec les passagers (6, 7) ;
∘ l'acheminement du signal (S) par l'intermédiaire du réseau local (22) ;
∘ la réception et/ou l'acheminement de flux RTP par l'intermédiaire du réseau local (22) ;
∘ la conversion d'un signal audio analogique (A, A'), notamment un signal audio analogique (A, A') se rapportant à un message vocal, en un flux RTP, notamment un flux SRTP ; et
∘ la conversion des paquets du flux RTP en un signal audio analogique (A, A') respectif.

10. Système selon la revendication 8 ou 9, dans lequel le serveur VoIP (4) est configuré pour réaliser au moins l'une action parmi :
- l'initiation de l'établissement d'au moins une partie de la connexion de données VolP, notamment une connexion de données VolP avec le système audio (5) ;
- le maintien de la connexion de données VolP établie ;
- le fait de mettre fin à la connexion de données VolP établie ;
- la communication avec le dispositif mobile (1, 1') et le système audio (5) à l'aide du RTP, notamment du SRTP ; et
- la création d'une notification (N), notamment une notification d'alerte, et l'acheminement de la notification (N) par l'intermédiaire du réseau local (22) lorsqu'un état de fonctionnement du dispositif de communication avec les passagers (6, 7) a changé ; et/ou
dans lequel le système audio (5) est configuré pour réaliser au moins l'une action parmi :
- l'initiation, lors de la réception, en provenance du dispositif mobile (1, 1'), par l'intermédiaire du serveur VolP (4), d'un premier message d'initialisation de communication, notamment un message SIP respectif, par ex. "CmdSetPassComMode=1", du réglage du dispositif de communication avec les passagers (6, 7) sur un mode d'écoute pour la connexion de données (DC, VDC, ADC) ; et
- l'initiation, lors de la réception, en provenance du dispositif mobile (1, 1'), par l'intermédiaire du serveur VoIP (4), d'un deuxième message d'initialisation de communication, notamment un message SIP respectif, par ex. "CmdSetPassComMode=0", du réglage du dispositif de communication avec les passagers (6, 7) dans un mode de parole pour la connexion de données (DC, VDC, ADC).

11. Système selon l'une quelconque des revendications 8 à 10, dans lequel le dispositif mobile (1, 1') est un mobile multifonction ou un ordinateur tablette, et/ou dans lequel le système est configuré pour réaliser le procédé selon l'une quelconque des revendications 1 à 8, et/ou dans lequel le réseau local (22) est un réseau de données câblé et/ou utilise le protocole Internet et/ou la technologie Ethernet.

12. Système selon l'une quelconque des revendications 8 à 11, dans lequel le dispositif mobile (1, 1') comprend une application qui, lorsqu'elle est exécutée sur le dispositif mobile (1, 1'), est configurée pour:
- créer une entrée dans une liste ou une base de données stockée localement et/ou afficher un message et/ou la notification (N) sur l'écran du dispositif mobile (1, 1') lors de la réception du signal (S) ;
- créer et/ou activer au moins un bouton sur l'écran lors de la réception du signal (S) ou lorsqu'un utilisateur du dispositif mobile (1, 1') répond au message affiché ou à un affichage de l'entrée d'une manière prédéfinie ; et/ou
- initialiser l'établissement de la connexion de données (VDC), typiquement, par l'intermédiaire du serveur VoIP (4).

13. Système selon la revendication 12, dans lequel l'au moins un bouton permet au moins l'une action parmi :
- la sélection, pour le dispositif mobile (1, 1'), d'un mode de parole pour la connexion de données (DC, VDC, ADC) ;
- la sélection, pour le dispositif mobile (1, 1'), d'un mode d'écoute pour la connexion de données (DC, VDC, ADC) ;
- l'initialisation de l'établissement de la connexion de données (DC, VDC, ADC) ; et
- l'initialisation du fait de mettre fin à la connexion de données (DC, VDC, ADC).

14. Système selon l'une quelconque des revendications 10 à 13, dans lequel le dispositif mobile (1, 1') est, lorsqu'il est connecté, configuré, typiquement par l'intermédiaire de l'application, pour réaliser au moins l'une action parmi :
- l'envoi du premier message d'initialisation de communication si le mode de parole est sélectionné ;
- l'envoi du deuxième message d'initialisation de communication si le mode d'écoute est sélectionné ;
- lors de la réception, en provenance du système audio (5), par l'intermédiaire du serveur VolP (4), d'un troisième message d'initialisation de communication, notamment un message SIP respectif, par ex. "StatusPassComMode=1", l'activation du mode de parole du dispositif mobile (1, 1') pour la connexion de données (DC, VDC, ADC) ; et
- lors de la réception, en provenance du système audio (5), par l'intermédiaire du serveur VolP (4), d'un quatrième message d'initialisation de communication, notamment un message SIP respectif, par ex. "StatusPassComMode=0", l'activation du mode d'écoute du dispositif mobile (1, 1') pour la connexion de données (DC, VDC, ADC).

15. Système selon l'une quelconque des revendications 8 à 14, dans lequel au moins l'un parmi le serveur VolP (4), le dispositif mobile (1, 1'), l'application et le système audio (5) est configuré pour utiliser au moins l'un parmi un protocole d'initiation de session, SIP, un protocole de transmission en temps réel, RTP, notamment SRTP, et un protocole de description de session, SDP, et/ou dans lequel au moins l'un parmi le dispositif mobile, l'application, le système audio (5) et le dispositif de communication avec les passagers (6) peut fonctionner en tant qu'agent utilisateur SIP, et/ou dans lequel le serveur VolP (4) est fourni par un ou plusieurs dispositifs informatiques d'un système de confort des passagers du véhicule (71, 81, 91, 101, 201, 301), et/ou dans lequel le système audio (5) comprend un convertisseur audio configuré pour convertir le message VolP (VM, VM') en un signal audio analogique (AM), notamment un amplificateur de train, et/ou dans lequel au moins l'un parmi le serveur VolP (4), le convertisseur audio et le système audio (5) est mis en œuvre en tant que dispositif logique respectif.
